# EUROPEAN PATENT APPLICATION

(11) **EP 4 647 294 A1**
(43) Date of publication of application: **12.11.2025**
(21) Application number: 24824906.2
(22) Date of filing: 07.02.2024
(51) Int. Cl.: B60L 58/27, H01M 10/615

(54) **MOBILE APPARATUS, CHARGING CONTROL METHOD, AND CHIP**

(30) Priority: 21.06.2023 CN 202310746663
(71) Applicant: Huawei Technologies Co., Ltd., Shenzhen, Guangdong 518129 (CN)
(72) Inventor: DONG, Chuanlong, Shenzhen, Guangdong 518129 (CN); ZHAO, Zhongling, Shenzhen, Guangdong 518129 (CN); CHEN, Liangjin, Shenzhen, Guangdong 518129 (CN); WU, Haolin, Shenzhen, Guangdong 518129 (CN)
(74) Representative: Goddar, Heinz J.
(86) International application number: PCT/CN2024/076731
(87) International publication number: WO 2024/260003

(57) **Abstract**

A mobile apparatus, a charging control method, and a chip are provided, and relate to the field of electric vehicle (10) charging. The charging control method is applied to the mobile apparatus. The mobile apparatus is configured to connect to a charging pile (20) to form a charging system. The charging pile is configured to charge a cell (101) of the mobile apparatus. The method includes: detecting a temperature of the cell; and if the temperature of the cell is equal to a target temperature, disabling a heating function for the cell until charging ends, where a temperature change of the cell is positively correlated with internal resistance of the cell and a charging current provided by the charging pile. This solution can implement fast charging of the cell.

## Description

This application claims priority to Chinese Patent Application No. 202310746663.7, filed with the China National Intellectual Property Administration on June 21, 2023 and entitled "MOBILE APPARATUS, CHARGING CONTROL METHOD, AND CHIP", which is incorporated herein by reference in its entirety.

### TECHNICAL FIELD

Embodiments of this application relate to the field of electric vehicle charging, and in particular, to a mobile apparatus, a charging control method, and a chip.

### BACKGROUND

With aggravation of energy shortage and environmental pollution in the modern society, electric vehicles have received widespread attention as new energy vehicles. In the electric vehicle, a power battery serves as an energy source to drive the vehicle to travel. With improvement of vehicle performance and acceleration of life rhythm, users are more concerned about charging time.

However, a cell of the power battery has the following feature: A battery capacity and a charge/discharge speed decrease with an ambient temperature within a specific temperature range, and the charge/discharge speed decreases sharply when the temperature is outside the temperature range. Based on this feature, during charging of the cell, to ensure shortest charging time and safety of the cell, thermal management usually needs to be performed on a power battery group (for example, in a scenario with a relatively low ambient temperature, heating is performed to increase the charge/discharge speed; or to avoid triggering a current-limiting temperature, the cell is cooled to ensure the safety of the cell), so that energy storage and charge/discharge capabilities of the power battery group can be fully utilized.

However, repeated thermal management consumes a specific amount of time. Therefore, how to implement fast charging of the cell becomes a problem that needs to be resolved.

### SUMMARY

Embodiments of this application provide a mobile apparatus, a charging control method, and a chip, to implement fast charging of a cell on a premise of saving energy as much as possible.

According to a first aspect, a charging control method is provided. The charging control method is applied to a mobile apparatus. The mobile apparatus is configured to connect to a charging pile to form a charging system. The charging pile is configured to charge a cell of the mobile apparatus. The method includes: detecting a temperature of the cell; and if the temperature of the cell is equal to a target temperature, disabling a heating function for the cell until charging ends, where a temperature change of the cell is positively correlated with internal resistance of the cell and a charging current provided by the charging pile. In this way, first, after the temperature of the cell reaches a relatively high level, namely, the target temperature, the heating function for the cell may be disabled. In a charging process of the cell, the charging current is consumed on the internal resistance of the cell, so that heat is generated to maintain the temperature of the cell. In addition, the cell is heated by the heat generated by the internal resistance, so that the temperature of the cell increases. This helps improve a charging speed of the cell, and implements fast charging of the cell.

In a possible implementation, if the temperature of the cell is not equal to the target temperature, that is, before the temperature of the cell is equal to the target temperature, the method further includes: enabling a thermal management function for the cell until the temperature of the cell is equal to the target temperature, where the thermal management function includes the heating function or a cooling function. Specifically, when the charging pile starts to charge the cell, the temperature of the cell of an electric vehicle does not reach a level of the target temperature. In this case, to improve the charging speed, when the charging pile starts to charge the cell or before the charging pile starts to charge the cell, the heating function for the cell may be enabled until the temperature of the cell is higher than or equal to the target temperature. For another example, when the charging pile starts to charge the cell, the temperature of the cell of an electric vehicle is higher than a level of the target temperature. In this case, a current-limiting temperature may be triggered in a subsequent charging process, causing a sudden decrease of the charging current and reducing the charging speed. Therefore, to avoid triggering the current-limiting temperature and improve the charging speed, when the charging pile starts to charge the cell or before the charging pile starts to charge the cell, a refrigeration function for the cell may be enabled until the temperature of the cell is equal to the target temperature.

In a possible implementation, after the heating function for the cell is disabled, the cooling function for the cell is kept in a disabled state in the charging process of the cell. In this way, energy consumption can be further reduced without cooling the cell.

In a possible implementation, to avoid a decrease of the charging speed caused by thermal current limiting triggered by an excessively high temperature in the charging process, the cooling function needs to be enabled in advance before the current-limiting temperature is reached. Therefore, after the heating function for the cell is disabled, if it is determined that the temperature of the cell is higher than or equal to a first temperature, where the first temperature is lower than the current-limiting temperature, the refrigeration function is enabled to cool the cell. In this way, safety of a power battery is ensured.

In a possible implementation, the method further includes: obtaining a state of charge (state of charge, SOC) of the cell; and determining the target temperature based on the state of charge and a target temperature rise curve, where a distance between the target temperature and the target temperature rise curve is less than or equal to a predetermined error value, a horizontal coordinate of the target temperature rise curve is the state of charge, and a vertical coordinate of the target temperature rise curve is a temperature. In this way, the target temperature may be determined by looking up the target temperature rise curve based on the state of charge of the cell.

In a possible implementation, after the heating function for the cell is disabled, in any state of charge, a distance between the temperature of the cell and a target temperature rise curve is less than or equal to a predetermined error value, where a horizontal coordinate of the target temperature rise curve is the state of charge, and a vertical coordinate of the target temperature rise curve is a temperature. In this way, when the heating function for the cell is disabled, the temperature of the cell gradually increases based on the target temperature rise curve, thereby ensuring the charging speed.

In a possible implementation, the method further includes: obtaining an ambient temperature; and determining the target temperature rise curve based on the ambient temperature, where the temperature on the target temperature rise curve is negatively correlated with the ambient temperature in a same state of charge. For example, a higher ambient temperature indicates a lower temperature on the target temperature rise curve. In this way, temperature compensation may be performed based on impact of the ambient temperature on the target temperature rise curve, to reduce impact of the ambient temperature on the charging speed of the cell.

In a possible implementation, the temperature on the target temperature rise curve is positively correlated with the state of charge SOC of the cell. In other words, after the heating function is disabled, the temperature of the cell gradually increases with an increase of the SOC in the charging process. This ensures the charging speed of the cell.

In a possible implementation, the target temperature rise curve is determined based on a maximum charging current of the charging pile.

In a possible implementation, determining the target temperature rise curve based on the maximum charging current of the charging pile includes: in the state of charge, if a temperature that is of the cell and that corresponds to the maximum charging current of the charging pile is higher than a temperature on a first temperature rise curve, using the first temperature rise curve as the target temperature rise curve, where a horizontal coordinate of the first temperature rise curve is the state of charge, and a vertical coordinate of the first temperature rise curve is the temperature; or in the state of charge, if the temperature that is of the cell and that corresponds to the maximum charging current of the charging pile is lower than the temperature on the first temperature rise curve, using a second temperature rise curve as the target temperature rise curve, where a horizontal coordinate of the second temperature rise curve is the state of charge, a vertical coordinate of the second temperature rise curve is a temperature, and in the state of charge, the temperature on the second temperature rise curve is lower than the temperature on the first temperature rise curve. When a capability of the charging pile is strong enough, that is, the maximum charging current provided by the charging pile is greater than or equal to a charging current that is allowed to be charged under all conditions of the power battery, an ideal first temperature rise curve may be obtained through experiment for the used power battery and used as the target temperature rise curve. When the capability of the charging pile is limited, that is, the maximum charging current provided by the charging pile is less than a charging current that is allowed to be charged under some state conditions of the power battery, another second temperature rise curve may be obtained based on the capability of the charging pile and used as the target temperature rise curve.

In a possible implementation, in a same state of charge, the maximum charging current of the charging pile is positively correlated with the temperature of the cell. In this way, when the maximum charging current of the charging pile is limited, the target temperature may be increased to a relatively low temperature of the cell. Compared with a case in which the cell needs to be heated to a relatively high temperature when the maximum charging current of the charging pile is relatively high, this can reduce energy consumed for heating the cell.

In a possible implementation, obtaining the state of charge of the cell specifically includes: obtaining navigation information, and determining, based on the navigation information, the state of charge of the cell upon arrival at the charging pile via navigation; and then controlling, based on the state of charge of the cell, the thermal management function for the cell to be enabled, to heat or cool the cell to the target temperature before navigation to the charging pile, where the thermal management function includes the heating function or the refrigeration function. In this solution, the navigation information may be obtained, and before the mobile apparatus arrives at the charging pile, the temperature of the cell may be heated (cooled) through thermal management to the target temperature on the target temperature rise curve. In this way, because the cell is heated in advance before navigation to the charging pile, impact, of thermal management on the cell in the charging process, on charging time is reduced.

In a possible implementation, obtaining the state of charge of the cell specifically includes: obtaining the state of charge of the cell after the charging pile charges the cell of the mobile apparatus; and then controlling, based on the state of charge of the cell, the thermal management function for the cell to be enabled, until the cell is heated or cooled to the target temperature, where the thermal management function includes the heating function or the refrigeration function. In this solution, the cell may alternatively be thermally managed to the target temperature while being charged.

According to a second aspect, a charging control apparatus is provided. The charging control apparatus is used in a mobile apparatus, and may be the mobile apparatus or a chip or a chip system disposed in the mobile apparatus. The mobile apparatus is configured to connect to a charging pile to form a charging system. The charging pile is configured to charge a cell of the mobile apparatus. The charging control apparatus includes a processor and a memory coupled to the processor. The memory stores program code, and the processor is configured to execute the program code in the memory, to perform the charging control method according to the first aspect and the possible implementations of the first aspect.

According to a third aspect, a chip is provided. The chip includes the charging control apparatus according to the second aspect and the possible implementations of the second aspect.

According to a fourth aspect, a mobile apparatus is provided. The mobile apparatus includes a cell and the charging control apparatus according to the third aspect and the possible implementations of the third aspect connected to the cell.

According to a fifth aspect, a charging system is provided. The charging system includes a mobile apparatus and a charging pile. The mobile apparatus includes the mobile apparatus according to the fourth aspect and the possible implementations of the fourth aspect.

For technical problems resolved by the second aspect to the fifth aspect and the possible implementations of the second aspect to the fifth aspect and implemented technical effects thereof, refer to the descriptions in the first aspect and the possible implementations of the first aspect. Details are not described again.

### BRIEF DESCRIPTION OF DRAWINGS

FIG. 1 is a diagram of a structure of a charging system according to an embodiment of this application;
FIG. 2 is a diagram of a structure of a charging control apparatus according to an embodiment of this application;
FIG. 3 is a schematic flowchart of a charging control method according to an embodiment of this application;
FIG. 4 is a diagram of an architecture of a charging system according to an embodiment of this application;
FIG. 5 is a schematic flowchart of a charging control method according to another embodiment of this application;
FIG. 6 is a diagram of a charging control method according to still another embodiment of this application;
FIG. 7 is a schematic flowchart of a charging control method according to yet another embodiment of this application; and
FIG. 8 is a diagram of a structure of a charging control apparatus according to an embodiment of this application.

### DESCRIPTION OF EMBODIMENTS

Embodiments of this application provide a mobile apparatus, a charging control method, and a chip. The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The solutions disclosed in embodiments of this application may be applied to a mobile apparatus that uses a power battery as power energy, and in particular, to a mobile apparatus that uses a lithium ion power battery as power energy. The mobile apparatus may be an intelligent device that uses a power battery, including but not limited to: a smart home device, for example, a television, a ground sweeping robot, an intelligent desk lamp, an acoustic system, an intelligent lighting system, an electrical control system, home background music, a home theater system, an intercom system, or a video surveillance; an intelligent transportation device, for example, an electric vehicle, an electric ship, an electric drone, an electric train, or an electric truck; and a smart manufacturing device, for example, a robot, an industrial device, intelligent logistics, or a smart factory. Alternatively, the mobile apparatus may be a computer device that uses a power battery, for example, a desktop computer, a personal computer, or a server. It should be further understood that the mobile apparatus may alternatively be a portable electronic device that uses a power battery, for example, a mobile phone, a tablet computer, a palmtop computer, a headset, an acoustic device, a wearable device (for example, a smartwatch), a vehicle-mounted device, a virtual reality device, or an augmented reality device. An example of the portable electronic device includes but is not limited to a portable electronic device carrying another operating system. The portable electronic device may alternatively be, for example, a laptop computer (Laptop) with a touch-sensitive surface (for example, a touch panel). The following example mainly uses an electric vehicle as an example for description.

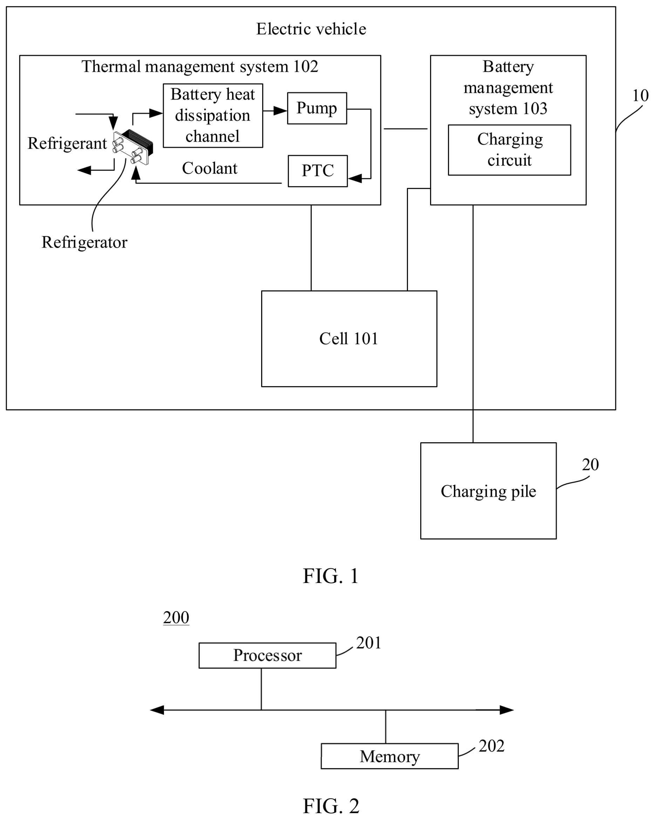

In a specific application scenario, the solutions disclosed in embodiments of this application may be applied to an electric vehicle. The electric vehicle is also referred to as a new energy vehicle, and is a vehicle driven by electric energy. FIG. 1 is a diagram of a charging system of an electric vehicle according to an embodiment of this application. The charging system of the electric vehicle includes an electric vehicle 10 and a charging pile 20. The electric vehicle 10 mainly includes a cell 101, a battery management system (battery management system, BMS) 103, and a thermal management system (thermal management system, TMS) 102. The charging pile 20 may charge the cell 101 of the electric vehicle 10 (for example, the battery management system 103 may include a charging circuit configured to charge the cell 101, and the charging pile 20 may charge the cell 101 by using the charging circuit). In addition, thermal management is performed on the cell 101 by using a thermal management function of the thermal management system 102. For example, the cell 101 is heated (cooled) by using a heating function (a refrigeration function). In addition, the battery management system 103 may further detect parameters such as a voltage, a current, and a temperature of the cell 101, and may send a thermal management request to the thermal management system 102 based on the detected parameters, to enable or disable the thermal management function (the heating function or the refrigeration function) of the thermal management system 102. In some examples, the charging pile 20 inputs a charging current to the cell 101 and the thermal management system 102 based on a target current command output by the battery management system 103 and a current of the charging pile 20. The battery management system 103 determines a current status of the cell 101 based on the detected voltage, current, and temperature of the battery, and requests corresponding thermal management. The thermal management system 102 receives the thermal management request output by the battery management system 103, and performs heating, cooling, or other processing on the cell 101. FIG. 1 further shows a typical structure of the thermal management system 102. The structure includes a path for flowing coolant, where the path includes a battery heat dissipation channel, a pump, a positive temperature coefficient (positive temperature coefficient, PTC) heater, and a refrigerator. A refrigerant is introduced into the refrigerator to cool the coolant (that is, implement the refrigeration function) through heat exchange with the coolant. The PTC may heat the coolant (that is, implement the heating function). The cell 101 is in direct contact with the battery heat dissipation channel, and the pump drives the coolant to circulate in the battery heat dissipation channel, to take away heat of the cell 101 to cool (cool) the cell 101, or provide heat for the cell 101 to heat (heat) the cell 101.

Usually, charging time of an electric vehicle is always one of main indicators considered by a consumer for purchasing a vehicle. A charging speed of the electric vehicle is closely related to a charging current allowed to be charged into the cell 101. The charging current allowed to be charged into the cell 101 is closely related to the temperature and a state of charge (state of charge, SOC) of the cell 101 in a power battery. Usually, the battery management system 103 controls the thermal management system 102 to adjust a temperature of the coolant to affect the temperature of the cell 101, thereby changing the charging current allowed to be charged into the cell 101.

In a scenario in which a cell of a test specification is used, a charge rate map (map) table including a detected temperature and an SOC of the cell and a charge rate (Charge rate*Battery capacity, namely, a charging current provided by a charging pile) is shown in Table 1 below.

**Table 1**

| Temperature/SOC | 5% | 10% | 15% | 20% | 25% | 30% | 35% | 40% | 45% | 50% |
|---|---|---|---|---|---|---|---|---|---|---|
| <-30 | 0.0 | 0.0 | 0.0 | 0.0 | 0.0 | 0.0 | 0.0 | 0.0 | 0.0 | 0.0 |
| -30 | 0.0 | 0.0 | 0.0 | 0.0 | 0.0 | 0.0 | 0.0 | 0.0 | 0.0 | 0.0 |
| -25 | 0.0 | 0.0 | 0.0 | 0.0 | 0.0 | 0.0 | 0.0 | 0.0 | 0.0 | 0.0 |
| -20 | 0.2 | 0.1 | 0.1 | 0.1 | 0.1 | 0.1 | 0.1 | 0.1 | 0.1 | 0.1 |
| -15 | 0.2 | 0.2 | 0.2 | 0.2 | 0.1 | 0.1 | 0.1 | 0.1 | 0.1 | 0.1 |
| -10 | 0.2 | 0.3 | 0.3 | 0.3 | 0.2 | 0.2 | 0.2 | 0.2 | 0.2 | 0.2 |
| -5 | 0.2 | 0.5 | 0.5 | 0.4 | 0.4 | 0.3 | 0.3 | 0.3 | 0.3 | 0.3 |
| 0 | 0.2 | 0.7 | 0.7 | 0.6 | 0.5 | 0.5 | 0.5 | 0.4 | 0.4 | 0.4 |
| 5 | 0.2 | 1.0 | 0.9 | 0.8 | 0.8 | 0.7 | 0.6 | 0.6 | 0.5 | 0.5 |
| 10 | 0.2 | 1.3 | 1.2 | 1.1 | 1.0 | 0.9 | 0.8 | 0.8 | 0.7 | 0.7 |
| 15 | 0.2 | 1.6 | 1.6 | 1.4 | 1.3 | 1.2 | 1.1 | 1.0 | 0.9 | 0.8 |
| 20 | 0.2 | 1.7 | 1.7 | 1.7 | 1.6 | 1.5 | 1.3 | 1.2 | 1.1 | 1.0 |
| 25 | 0.2 | 1.7 | 1.7 | 1.7 | 1.7 | 1.7 | 1.7 | 1.6 | 1.4 | 1.2 |
| 30 | 0.2 | 2.0 | 2.0 | 2.0 | 2.0 | 2.0 | 1.9 | 1.7 | 1.6 | 1.4 |
| 35 | 0.2 | 2.1 | 2.1 | 2.1 | 2.1 | 2.1 | 2.1 | 1.9 | 1.7 | 1.5 |
| 40 | 0.2 | 2.1 | 2.1 | 2.1 | 2.1 | 2.1 | 2.1 | 2.1 | 1.9 | 1.7 |
| 45 | 0.2 | 1.0 | 1.0 | 1.0 | 1.0 | 1.0 | 1.0 | 1.0 | 0.9 | 0.8 |
| 50 | 0.2 | 0.5 | 0.5 | 0.5 | 0.5 | 0.5 | 0.5 | 0.5 | 0.5 | 0.4 |
| 55 | 0.2 | 0.2 | 0.2 | 0.2 | 0.2 | 0.2 | 0.2 | 0.2 | 0.2 | 0.2 |
| 60 | 0.2 | 0.0 | 0.0 | 0.0 | 0.0 | 0.0 | 0.0 | 0.0 | 0.0 | 0.0 |
| 65 | 0.2 | 0.0 | 0.0 | 0.0 | 0.0 | 0.0 | 0.0 | 0.0 | 0.0 | 0.0 |
| >65 | 0.2 | 0.0 | 0.0 | 0.0 | 0.0 | 0.0 | 0.0 | 0.0 | 0.0 | 0.0 |

| Temperature/SOC | 55% | 60% | 65% | 70% | 75% | 80% | 85% | 90% | 95% | |
|---|---|---|---|---|---|---|---|---|---|---|
| <-30 | 0.0 | 0.0 | 0.0 | 0.0 | 0.0 | 0.0 | 0.0 | 0.0 | 0.0 | |
| -30 | 0.0 | 0.0 | 0.0 | 0.0 | 0.0 | 0.0 | 0.0 | 0.0 | 0.0 | |
| -25 | 0.0 | 0.0 | 0.0 | 0.0 | 0.0 | 0.0 | 0.0 | 0.0 | 0.0 | |
| -20 | 0.1 | 0.0 | 0.0 | 0.0 | 0.0 | 0.0 | 0.0 | 0.0 | 0.0 | |
| -15 | 0.1 | 0.1 | 0.1 | 0.1 | 0.0 | 0.0 | 0.0 | 0.0 | 0.0 | |
| -10 | 0.2 | 0.1 | 0.1 | 0.1 | 0.1 | 0.0 | 0.0 | 0.0 | 0.0 | |
| -5 | 0.2 | 0.2 | 0.2 | 0.2 | 0.1 | 0.1 | 0.0 | 0.0 | 0.0 | |
| 0 | 0.3 | 0.3 | 0.3 | 0.2 | 0.2 | 0.1 | 0.1 | 0.0 | 0.0 | |
| 5 | 0.5 | 0.4 | 0.4 | 0.3 | 0.3 | 0.2 | 0.1 | 0.1 | 0.0 | |
| 10 | 0.6 | 0.5 | 0.5 | 0.4 | 0.4 | 0.3 | 0.2 | 0.1 | 0.0 | |
| 15 | 0.8 | 0.7 | 0.6 | 0.6 | 0.5 | 0.4 | 0.2 | 0.1 | 0.1 | |
| 20 | 0.9 | 0.8 | 0.8 | 0.7 | 0.6 | 0.5 | 0.3 | 0.2 | 0.1 | |
| 25 | 1.1 | 1.0 | 0.9 | 0.8 | 0.8 | 0.6 | 0.5 | 0.3 | 0.1 | |
| 30 | 1.3 | 1.2 | 1.1 | 1.0 | 0.9 | 0.8 | 0.6 | 0.4 | 0.2 | |
| 35 | 1.4 | 1.2 | 1.1 | 1.0 | 0.9 | 0.8 | 0.6 | 0.4 | 0.2 | |
| 40 | 1.6 | 1.4 | 1.3 | 1.2 | 1.1 | 1.0 | 0.6 | 0.4 | 0.2 | |
| 45 | 0.7 | 0.7 | 0.6 | 0.5 | 0.5 | 0.4 | 0.3 | 0.2 | 0.1 | |
| 50 | 0.4 | 0.4 | 0.3 | 0.3 | 0.3 | 0.2 | 0.2 | 0.1 | 0.1 | |
| 55 | 0.2 | 0.2 | 0.2 | 0.2 | 0.2 | 0.2 | 0.2 | 0.1 | 0.0 | |
| 60 | 0.0 | 0.0 | 0.0 | 0.0 | 0.0 | 0.0 | 0.0 | 0.0 | 0.0 | |
| 65 | 0.0 | 0.0 | 0.0 | 0.0 | 0.0 | 0.0 | 0.0 | 0.0 | 0.0 | |
| >65 | 0.0 | 0.0 | 0.0 | 0.0 | 0.0 | 0.0 | 0.0 | 0.0 | 0.0 | |

It can be learned with reference to Table 1 that, for a power battery, a relatively large charging current is usually allowed when the temperature of the cell is 20°C to 40°C, and a higher temperature within the range indicates a larger allowed charging current. Therefore, when charging is performed in a low-temperature environment, currently, the cell is usually preheated, or heated in a charging process, to achieve a faster charging speed. However, when the temperature of the cell reaches a relatively high temperature (for example, 45°C), the charging current allowed to be charged is significantly reduced. Therefore, to avoid triggering a current-limiting temperature, the cell is usually cooled when the temperature of the cell is lower than the current-limiting temperature.

Currently, a mainstream thermal management manner in the charging process is to set a threshold for a heating temperature, and the threshold is a fixed hysteresis interval. For example, when the temperature is lower than 15°C, the heating function is enabled, and when the temperature is higher than 18°C, the heating function is disabled. However, repeated thermal management needs to consume a specific amount of time Therefore, how to implement fast charging of the cell becomes a problem that needs to be resolved.

In this embodiment of this application, before the charging pile charges the cell or after charging is started, thermal management is performed on the cell in advance until the cell reaches a target temperature. After the temperature of the cell reaches a relatively high level, namely, the target temperature, the heating function for the cell may be disabled. In the charging process of the cell, the charging current provided by the charging pile is consumed on internal resistance of the cell, so that heat is generated to maintain the temperature of the cell. In addition, the cell is heated by the heat generated by the internal resistance, so that the temperature of the cell increases. This helps improve a charging speed of the cell, and implements fast charging of the cell.

FIG. 2 is a diagram of a charging control apparatus according to an embodiment of this application. The charging control apparatus 200 may be the battery management system 103 provided in the foregoing embodiment, or may be applied to a vehicle control unit (vehicle control unit, VCU). The charging control apparatus 200 includes a processor 201 and a memory 202 coupled to the processor 201. The memory 202 is configured to store program code of a charging control method provided in embodiments of this application. The processor 201 is configured to execute the program code stored in the memory. The charging control apparatus 200 may implement, by using the processor 201 and the program code in the memory 202, the charging control method provided in embodiments of this application.

The processor may be a general-purpose central processing unit (central processing unit, CPU), a microprocessor, an application-specific integrated circuit (application-specific integrated circuit, ASIC), a field programmable gate array (field programmable gate array, FPGA), or one or more integrated circuits configured to control program execution of the solutions of this application.

The memory may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto.

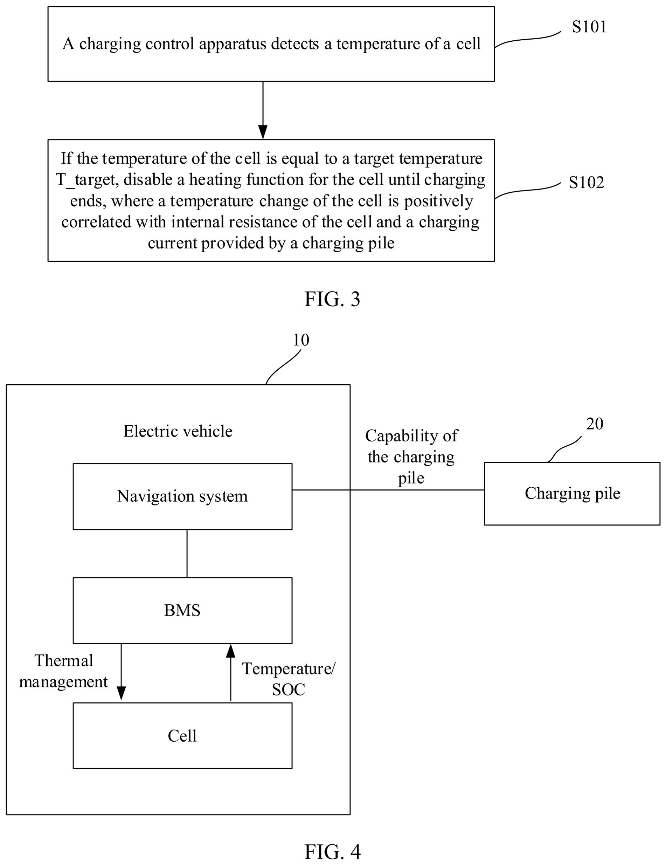

The following describes the charging control method provided in embodiments of this application. FIG. 3 is a flowchart of a charging control method according to an embodiment of this application. The method may be applied to a charging control apparatus in an electric vehicle, for example, a battery management system BMS or a vehicle control unit VCU of the electric vehicle. The electric vehicle is configured to connect to a charging pile to form a charging system. The charging pile is configured to charge a cell of the electric vehicle.

S101: The charging control apparatus detects a temperature of the cell.

Step S101 may be specifically that the battery management system BMS detects the temperature of the cell. Certainly, it may be understood that the battery management system BMS may detect the temperature of the cell at any moment. In step S101, detection of the temperature of the cell may be triggered when a charging connection is established between the charging pile and the electric vehicle, that is, temperature detection may be performed when the charging pile starts to charge the cell, or may be performed in a process in which the charging pile starts to charge the cell. Specifically, the charging control apparatus may detect the temperature T of the cell.

S102: If the temperature of the cell is equal to a target temperature T_target, disable a heating function for the cell until charging ends, where a temperature change of the cell is positively correlated with internal resistance of the cell and a charging current provided by the charging pile.

Certainly, in some examples, before the temperature of the cell is equal to the target temperature T_target, that is, if the temperature of the cell is not equal to the target temperature, the method further includes: enabling a thermal management function for the cell until the temperature of the cell is equal to the target temperature T_target, where the thermal management function includes the heating function or a cooling function. Specifically, when the charging pile starts to charge the cell, the temperature of the cell of the electric vehicle does not reach a level of the target temperature T_target. In this case, to improve a charging speed, when the charging pile starts to charge the cell or before the charging pile starts to charge the cell, the heating function for the cell may be enabled until the temperature of the cell is equal to the target temperature T_target. For another example, when the charging pile starts to charge the cell, the temperature of the cell of the electric vehicle is higher than a level of the target temperature T_target. In this case, a current-limiting temperature may be triggered in a subsequent charging process, causing a sudden decrease of the charging current and reducing a charging speed. Therefore, to avoid triggering the current-limiting temperature and improve the charging speed, when the charging pile starts to charge the cell or before the charging pile starts to charge the cell, a refrigeration function for the cell may be enabled until the temperature of the cell is equal to the target temperature T_target.

The foregoing positive correlation is used to represent a relationship between a parameter A and a parameter B. When the parameter A is positively correlated with the parameter B, it means that the parameter A increases with an increase of the parameter B. A form of the positive correlation is positive proportional correlation. When the parameter A is positively correlated with the parameter B, an increase of the parameter A and the increase of the parameter B are in a linear relationship. Correspondingly, in the following descriptions, negative correlation indicates that the parameter A decreases with the increase of the parameter B.

In some examples, before step S102, the method further includes: obtaining a state of charge of the cell; and determining the target temperature T_target based on the state of charge and a target temperature rise curve, where a distance between the target temperature T_target and the target temperature rise curve is less than or equal to a predetermined error value, a horizontal coordinate of the target temperature rise curve is the state of charge SOC, and a vertical coordinate of the target temperature rise curve is a temperature.

In the following solution, based on different capabilities of charging piles, the target temperature rise curve may be further determined based on a maximum charging current of a charging pile. The following solution mainly provides two manners of determining the target temperature rise curve.

When the capability of the charging pile is strong enough, that is, the charging current provided by the charging pile is greater than or equal to a charging current that is allowed to be charged under all conditions (the temperature and the SOC of the cell in Table 1) of a power battery, an ideal target temperature rise curve (a first temperature rise curve) may be obtained through experiment for the used power battery, as shown in Table 2.

**Table 2**

| Temperature/ SOC | 5 % | 10 % | 15 % | 20 % | 25 % | 30 % | 35 % | 40 % | 45 % | 50 % | 55 % | 60 % | 65 % | 70 % | 75 % | 80 % |
|---|---|---|---|---|---|---|---|---|---|---|---|---|---|---|---|---|
| T_optimal | 11 | 14 | 16 | 19 | 22 | 25 | 28 | 31 | 33 | 35 | 37 | 39 | 40 | 41 | 42 | 43 |

On the target temperature rise curve, a corresponding temperature T_optimal of the cell within an SOC range may be obtained. In this way, based on an actual SOC of the cell in the charging process, a corresponding target temperature T_target is close to the target temperature rise curve (T_target≈T_optimal). Therefore, when the detected temperature of the cell meets the temperature T_optimal corresponding to the target temperature rise curve within an SOC range, the heating function may be disabled in the subsequent charging process, and the temperature change of the cell is positively correlated with the internal resistance of the cell and the charging current provided by the charging pile. In addition, after the heating function for the cell is disabled, in any state of charge SOC, a distance between the temperature of the cell and the target temperature rise curve is less than or equal to a predetermined error value. In this way, when the heating function for the cell is disabled, the temperature of the cell gradually increases based on the target temperature rise curve, thereby ensuring the charging speed.

In addition, Table 2 is a target temperature rise curve provided when the capability of the charging pile is not limited. In some examples, when the capability of the charging pile is limited, that is, the charging current provided by the charging pile is less than a charging current that is allowed to be charged under some state conditions (the temperature and the SOC of the cell in Table 1) of the power battery, Table 1 may be looked up based on the capability of the charging pile, to obtain another target temperature rise curve (a second temperature rise curve), as shown in Table 3. The target temperature rise curve is determined based on the maximum charging current of the charging pile. In other words, the second temperature rise curve is a temperature rise curve measured by fully utilizing the capability of the charging pile.

**Table 3**

| Temperature/ SOC | 5 % | 10 % | 15 % | 20 % | 25 % | 30 % | 35 % | 40 % | 45 % | 50 % | 55 % | 60 % | 65 % | 70 % | 75 % | 80 % |
|---|---|---|---|---|---|---|---|---|---|---|---|---|---|---|---|---|
| T_pilecurrent | / | 10 | 15 | 15 | 15 | 20 | 20 | 25 | 25 | 30 | 30 | 40 | 40 | / | / | / |

It can be learned by comparing Table 2 and Table 3 that, in a same state of charge SOC, the maximum charging current of the charging pile is positively correlated with the temperature of the cell. To be specific, when the capability of the charging pile in Table 2 is higher than the capability of the charging pile in Table 3, in a same SOC (for example, 10%), a temperature T_pilecurrent of the cell in Table 3 is lower than the temperature T_optimal of the cell in Table 2. In this way, when the maximum charging current of the charging pile is limited, the target temperature may be increased to a relatively low temperature of the cell. Therefore, compared with a case in which the cell needs to be heated to a relatively high temperature when the maximum charging current of the charging pile is relatively high, this can reduce energy consumed for heating the cell.

According to Table 2 and Table 3, the manner of determining the target temperature rise curve includes: in the state of charge, if the temperature T_pilecurrent (which may be obtained by looking up Table 1) that is of the cell and that corresponds to the maximum charging current of the charging pile is higher than the temperature T_optimal on the first temperature rise curve (which may be obtained by looking up Table 2), using the first temperature rise curve as the target temperature rise curve, where a horizontal coordinate of the first temperature rise curve is the state of charge, and a vertical coordinate of the first temperature rise curve is the temperature; or in the state of charge, if the temperature T_pilecurrent (which may be obtained by looking up Table 1) that is of the cell and that corresponds to the maximum charging current of the charging pile is lower than the temperature T_optimal on the first temperature rise curve, using the second temperature rise curve as the target temperature rise curve, where a horizontal coordinate of the second temperature rise curve is the state of charge, a vertical coordinate of the second temperature rise curve is a temperature, and in the target state of charge, the temperature T_pilecurrent (which may be obtained by looking up Table 3, and in this case, the temperature on the second temperature rise curve is the temperature that is of the cell and that corresponds to the maximum charging current of the charging pile) on the second temperature rise curve is lower than the temperature T_optimal on the first temperature rise curve.

In addition, the temperature on the target temperature rise curve is positively correlated with the state of charge SOC of the cell. In other words, after the heating function is disabled, the temperature of the cell gradually increases with an increase of the SOC in the charging process. This ensures the charging speed of the cell. In addition, to reduce impact of an ambient temperature, the method further includes: obtaining the ambient temperature; and determining the target temperature rise curve based on the ambient temperature, where the temperature on the target temperature rise curve is negatively correlated with the ambient temperature in a same state of charge. For example, a higher ambient temperature indicates a lower temperature on the target temperature rise curve. In this way, temperature compensation may be performed on impact of the ambient temperature and the target temperature rise curve, to reduce impact of the ambient temperature on the charging speed of the cell.

In this way, first, after the temperature of the cell reaches a relatively high level, namely, the target temperature, the heating function for the cell may be disabled. In the charging process of the cell, the charging current is consumed on the internal resistance of the cell, so that heat is generated to maintain the temperature of the cell. In addition, the cell is heated by the heat generated by the internal resistance, so that the temperature of the cell increases. This helps improve the charging speed of the cell, and implements fast charging of the cell.

In addition, after the heating function for the cell is disabled, when the temperature of the cell increases based on the target temperature rise curve, the cooling function for the cell is disabled in the charging process of the cell. In this way, energy consumption can be further reduced without cooling the cell. Certainly, to avoid a decrease of the charging speed caused by thermal current limiting triggered by an excessively high temperature in the charging process, the cooling function needs to be enabled in advance before the current-limiting temperature is reached. Therefore, after the heating function for the cell is disabled, if it is determined that the temperature of the cell is higher than or equal to a first temperature, the refrigeration function is enabled to cool the cell, where the first temperature is lower than the current-limiting temperature. In this way, safety of the power battery is ensured.

In the following solutions, specific processes of the charging control method in two different application scenarios are separately provided.

Scenario 1: Navigation information may be obtained, and before the mobile apparatus arrives at the charging pile, the temperature of the cell may be heated (cooled) through thermal management to a target temperature on the target temperature rise curve.

Refer to FIG. 4. When a user navigates to a charging station by using a navigation system of an electric vehicle 10, after a BMS identifies a charging requirement of the user based on navigation information provided by the navigation system, the BMS determines, based on the navigation information, a state of charge SOC of a cell upon arrival at a charging pile via navigation; and controls, based on the state of charge SOC of the cell, a thermal management function (a heating function or a refrigeration function) for the cell to be enabled, to heat (or cool) the cell to a target temperature before arrival at the charging pile via navigation and consequently achieve a faster charging speed.

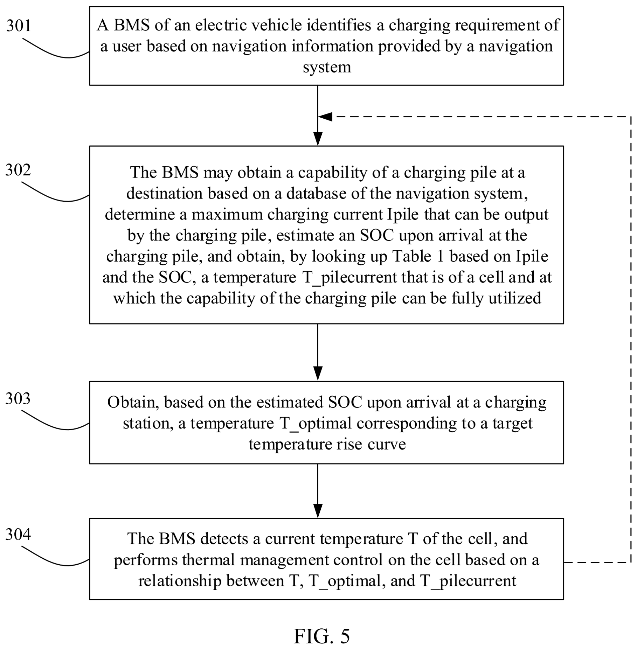

Specifically, with reference to FIG. 4 and FIG. 5, first, in step 301, the BMS of the electric vehicle identifies the charging requirement of the user based on the navigation information provided by the navigation system. In step 302, the BMS of the electric vehicle may obtain a capability of the charging pile at the destination based on a database of the navigation system (for example, the database may be stored in the memory 202 in FIG. 2), determine a maximum charging current Ipile that can be output by the charging pile, estimate the SOC upon arrival at the charging pile (in consideration of hysteresis of adjusting the temperature of the cell by using the thermal management function, the SOC may take a righter value, for example, the SOC may take a righter value of 15% for ease of table lookup when the SOC is estimated to be 12%), and obtain, by looking up Table 1 based on Ipile and the SOC, a temperature T_pilecurrent that is of the cell and at which the capability of the charging pile can be fully utilized. In addition, in step 303, a temperature T_optimal corresponding to a target temperature rise curve (a first temperature rise curve) is obtained by looking up Table 2 based on the estimated SOC (which may take a righter value) upon arrival at the charging station. The capability of the charging pile may be recorded after the electric vehicle establishes a connection to the charging pile at the destination in all previous charging processes, and the BMS of the electric vehicle may store, in the database, a mapping relationship established between the navigation information and the capability of the charging pile for future queries.

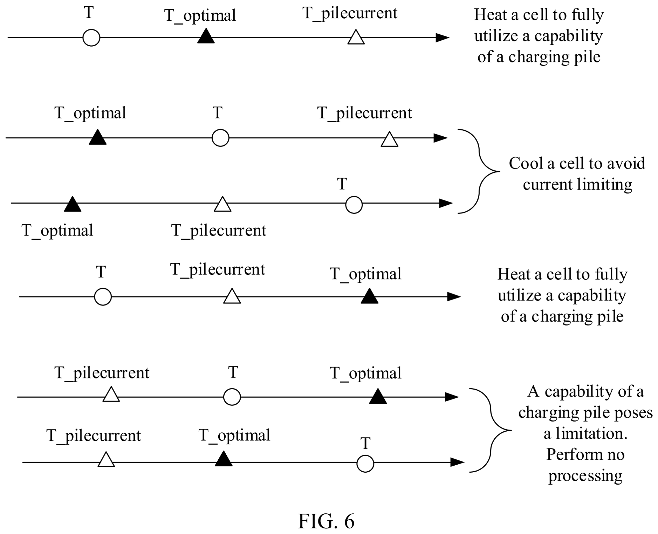

Then, because capabilities of charging piles at different destinations are different, relative value relationships between T_optimal and T_pilecurrent may be classified into two main types. Finally, in step 304, the BMS detects a current temperature T of the cell, and performs thermal management control on the cell based on a relationship between T, T_optimal, and T_pilecurrent. Refer to FIG. 6. Details are as follows:
(1) T_optimal<T_pilecurrent
   ① T<T_optimal<T_pilecurrent: The temperature T of the cell is lower than T_optimal. The cell is further heated, to achieve a faster charging speed. In this case, it is determined based on the first temperature rise curve that a target temperature for heating T_target=T _optimal.
   ② T_optimal<T<T_pilecurrent, or T_optimal<T_pilecurrent<T: The temperature T of the cell is higher than T_optimal, and may exceed a current-limiting temperature during the later stage of charging, affecting a charging speed. Therefore, the cell needs to be cooled. In this case, it is determined based on the first temperature rise curve that a target temperature for cooling T_target=T _optimal.
(2) T_pilecurrent<T_optimal
   ① T<T_pilecurrent<T_optimal: The temperature T of the cell is lower than T_pilecurrent, and T_pilecurrent is lower than T_optimal. Therefore, the cell needs to be heated to further fully utilize the capability of the charging pile. It is determined based on the second temperature rise curve that a target temperature for heating T_target=T_pilecurrent.
   ② T_pilecurrent<T<T_optimal, or T_pilecurrent<T_optimal<T: This indicates that the capability of the charging pile can be fully utilized, and the capability of the charging pile poses a limitation. Therefore, the thermal management function does not need to be enabled, and no processing is performed.

In addition, in the process in which the user navigates to the charging station, because a road condition for the user may change, the target temperature T_target may be periodically updated (for example, every five minutes) based on a periodically estimated state of charge SOC of the cell upon arrival at the charging station.

Table 4 provides charging time data of an electric vehicle, and includes time consumed for charging to an SOC of 80% under conventional thermal management control when initial temperatures of a cell are different.

**Table 4**

| Initial temperature/°C | Time consumed for charging to an SOC of 80%/Minute | | | | | |
|---|---|---|---|---|---|---|
| 5 | | 49.8 | | | | |
| 10 | | 47.1 | 41.7 | | | |
| 15 | | 39.4 | 37.0 | 34.8 | | |
| 40 | | | | 30.2 | 23.6 | 18.8 |
| Initial SOC | 5% | 10% | 20% | 30% | 40% | 50% |

Table 5 provides charging time data of an electric vehicle, and includes time consumed for charging to an SOC of 80% according to the charging control method provided in embodiments of this application when initial temperatures of a cell are different.

**Table 5**

| **Initial** temperature/°C | Time consumed for charging to an SOC of 80%/Minute | | | | | |
|---|---|---|---|---|---|---|
| 5 | 40.3 | 38.0 | 32.7 | 27.7 | 22.8 | 17.8 |
| 10 | 40.3 | 38.0 | 32.7 | 27.7 | 22.8 | 17.8 |
| 15 | 40.3 | 38.0 | 32.7 | 27.7 | 22.8 | 17.8 |
| 40 | 40.3 | 38.0 | 32.7 | 27.7 | 22.8 | 17.8 |
| Initial SOC | 5% | 10% | 20% | 30% | 40% | 50% |

It can be learned from comparison between the data in Table 4 and the data in Table 5 that, regardless of the initial temperature of the cell, in the solutions provided in embodiments of this application, the temperature of the cell can be adjusted to the most appropriate target temperature T_target before arrival at the charging pile, thereby ensuring shortest charging time.

Scenario 2: After the charging pile starts to charge the cell, the cell may be heated (cooled) through thermal management while being charged, until the temperature of the cell is controlled to a target temperature on the target temperature rise curve.

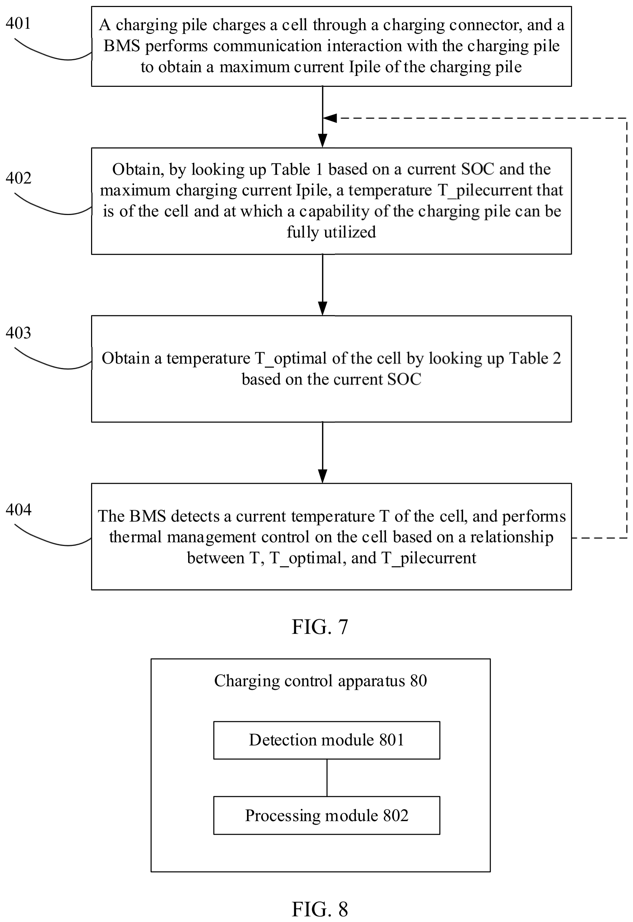

It should be noted that, when the temperature of the cell does not meet the target temperature on the target temperature rise curve, the cell is heated to the target temperature through thermal management while being charged; or if the temperature of the cell meets the target temperature on the target temperature rise curve, thermal management is not performed on the cell. Refer to FIG. 7. In step 401, after an electric vehicle arrives at a charging station, a charging pile charges the cell through a charging connector, and a BMS performs communication interaction with the charging pile to obtain a maximum charging current Ipile of the charging pile. In step 402, a temperature T_pilecurrent that is of the cell and at which a capability of the charging pile can be fully utilized is obtained by looking up Table 1 based on a current SOC (which may take a righter value) and the maximum charging current Ipile. In addition, in step 403, a temperature T_optimal corresponding to the target temperature rise curve (a first temperature rise curve) is obtained by looking up Table 2 based on the current SOC (which may take a righter value). Different from Scenario 1, in Scenario 2, the cell may be thermally managed while being charged in a charging process, until the temperature of the cell is equal to the target temperature T_target. In consideration of hysteresis of adjusting the temperature of the cell through thermal management, a specific table lookup manner may be as follows: taking a righter value within a corresponding range based on the current SOC, and then obtaining the corresponding temperature of the cell within a right-adjacent SOC range. For example, when the SOC is 32%, a righter value is 35%, and then a right-adjacent SOC range is 40%. According to Table 3, the temperature T_pilecurrent is 25°C. According to Table 2, the temperature T_optimal is 31°C.

Then, because capabilities of charging piles at different destinations are different, relative value relationships between T_optimal and T_pilecurrent may be classified into two main types. In step 404, the BMS detects a current temperature T of the cell, determines the target temperature T_target based on a relationship between T, T_optimal, and T_pilecurrent, and then performs thermal management control on the cell, to control the temperature of the cell to reach the target temperature T_target. Details are as follows:
(1) T_optimal<T_pilecurrent
   ① T<T_optimal<T_pilecurrent: The temperature T of the cell is lower than T_optimal. The cell is further heated, to achieve a faster charging speed. In this case, it is determined based on the first temperature rise curve that a target temperature for heating T_target=T_optimal.
   ② T_optimal< T<T_pilecurrent, or T_optimal<T_pilecurrent<T: The temperature T of the cell is higher than T_optimal, and may exceed a current-limiting temperature during the later stage of charging, affecting a charging speed. Therefore, the cell needs to be cooled. In this case, it is determined based on the first temperature rise curve that a target temperature for cooling T_target=T _optimal.
(2) T_pilecurrent<T_optimal
   ① T<T_pilecurrent<T_optimal: The temperature T of the cell is lower than T_pilecurrent, and T_pilecurrent is lower than T_optimal. Therefore, the cell needs to be heated to further fully utilize the capability of the charging pile. In this case, it is determined based on the second temperature rise curve that a target temperature for heating T_target=T_pilecurrent.
   ② T_pilecurrent<T<T_optimal, or T_pilecurrent<T_optimal<T: The capability of the charging pile can be fully utilized, and the capability of the charging pile poses a limitation. Therefore, the thermal management function does not need to be enabled, and no processing is performed.

Because the SOC increases continuously in the charging process, and the temperature of the cell changes in the thermal management measure, the state of charge of the cell may be periodically detected, so that the target temperature T_target is periodically updated (for example, every 5% SOC).

Table 6 provides charging time data of an electric vehicle, and includes time consumed for charging to an SOC from 30% to 80% under conventional thermal management (thermal management to 20°C while charging) control and time consumed for charging to an SOC from 30% to 80% under control after a temperature of a cell is thermally managed to a target temperature in this embodiment of this application when initial temperatures of the cell are different.

**Table 6**

| Charging scenario | Initial temperature/°C | Thermal management to 20°C while charging | Thermal management to a target temperature while charging |
|---|---|---|---|
| Time consumed for charging to an SOC from 30% to 80%/Minute | 0 | 27.3 | 23.8 |
| | 10 | 23 | 19.7 |
| | 20 | 20.4 | 16.8 |
| | 30 | 15.9 | 15.3 |

It can be learned from the data in Table 6 that, regardless of the initial temperature of the cell, in the solutions provided in embodiments of this application, the temperature of the cell can be adjusted to the most appropriate target temperature T_target while being charged when charging is started, thereby ensuring shortest charging time.

It may be understood that, to implement the foregoing functions, the charging control apparatus includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the charging control apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

For example, when the functional modules are obtained through division in an integrated manner, FIG. 8 is a diagram of a structure of a charging control apparatus. The charging control apparatus may be a mobile apparatus, a chip or a system on chip in the mobile apparatus, another combined device or component that can implement a function of the charging control apparatus, or the like. The charging control apparatus may be configured to perform the function of the charging control apparatus in the foregoing embodiments.

In a possible implementation, the charging control apparatus 80 shown in FIG. 8 includes a detection module 801 and a processing module 802. The detection module 801 is configured to perform step S101. The processing module 802 is configured to perform step S102.

All related content of the operations in the foregoing method embodiments may be cited in function descriptions of the corresponding functional modules. Details are not described herein again.

In this embodiment, the electronic device may be presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the charging control apparatus may be in a form of the charging control apparatus shown in FIG. 2.

For example, the processor 201 in FIG. 2 may invoke computer-executable instructions stored in the memory 202, to enable the electronic device to perform the charging control method in the foregoing method embodiments.

For example, functions/implementation processes of the detection module 801 and the processing module 802 in FIG. 8 may be implemented by the processor 201 in FIG. 2 by invoking the computer-executable instructions stored in the memory 202.

The charging control apparatus provided in this embodiment may perform the foregoing charging control method. Therefore, for technical effects that can be achieved by the charging control apparatus, refer to the foregoing method embodiments. Details are not described herein again.

Optionally, an embodiment of this application further provides a charging control apparatus (for example, the charging control apparatus may be a chip or a chip system). When the charging control apparatus is the chip system, the charging control apparatus may include a chip, or may include a chip and another discrete device. This is not specifically limited in this embodiment of this application.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions in embodiments of this application are executed. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging control method, applied to a mobile apparatus, wherein the mobile apparatus is configured to connect to a charging pile to form a charging system, the charging pile is configured to charge a cell of the mobile apparatus, and the method comprises:
detecting a temperature of the cell; and
if the temperature of the cell is equal to a target temperature, disabling a heating function for the cell until charging ends, wherein a temperature change of the cell is positively correlated with internal resistance of the cell and a charging current provided by the charging pile.

2. The charging control method according to claim 1, wherein if the temperature of the cell is not equal to the target temperature, the method further comprises:
enabling a thermal management function for the cell, wherein the thermal management function comprises the heating function or a cooling function.

3. The charging control method according to claim 1 or 2, wherein after the heating function for the cell is disabled, cooling for the cell is kept in a disabled state in a charging process of the cell.

4. The charging control method according to claim 1 or 2, wherein after the heating function for the cell is disabled, if the temperature of the cell is higher than or equal to a first temperature, a refrigeration function is enabled to cool the cell, wherein the first temperature is lower than a current-limiting temperature.

5. The charging control method according to any one of claims 1 to 4, wherein the method further comprises:
obtaining a state of charge of the cell; and
determining the target temperature based on the state of charge and a target temperature rise curve, wherein a distance between the target temperature and the target temperature rise curve is less than or equal to a predetermined error value, a horizontal coordinate of the target temperature rise curve is the state of charge, and a vertical coordinate of the target temperature rise curve is a temperature.

6. The charging control method according to any one of claims 1 to 4, wherein after the heating function for the cell is disabled, in any state of charge, a distance between the temperature of the cell and a target temperature rise curve is less than or equal to a predetermined error value, wherein a horizontal coordinate of the target temperature rise curve is the state of charge, and a vertical coordinate of the target temperature rise curve is a temperature.

7. The charging control method according to claim 5 or 6, wherein the method further comprises:
obtaining an ambient temperature; and
determining the target temperature rise curve based on the ambient temperature, wherein the temperature on the target temperature rise curve is negatively correlated with the ambient temperature in a same state of charge.

8. The charging control method according to claim 5, wherein the method further comprises:
determining the target temperature rise curve based on a maximum charging current of the charging pile.

9. The charging control method according to claim 8, wherein determining the target temperature rise curve based on the maximum charging current of the charging pile comprises:
in the state of charge, if a temperature that is of the cell and that corresponds to the maximum charging current of the charging pile is higher than a temperature on a first temperature rise curve, using the first temperature rise curve as the target temperature rise curve, wherein a horizontal coordinate of the first temperature rise curve is the state of charge, and a vertical coordinate of the first temperature rise curve is the temperature; or
in the state of charge, if the temperature that is of the cell and that corresponds to the maximum charging current of the charging pile is lower than the temperature on the first temperature rise curve, using a second temperature rise curve as the target temperature rise curve, wherein a horizontal coordinate of the second temperature rise curve is the state of charge, a vertical coordinate of the second temperature rise curve is a temperature, and in the state of charge, the temperature on the second temperature rise curve is lower than the temperature on the first temperature rise curve.

10. The charging control method according to claim 5, wherein obtaining the state of charge of the cell specifically comprises: obtaining navigation information, and determining, based on the navigation information, the state of charge of the cell upon arrival at the charging pile via navigation.

11. The charging control method according to claim 5, wherein obtaining the state of charge of the cell specifically comprises: obtaining the state of charge of the cell after the charging pile charges the cell of the mobile apparatus.

12. A charging control apparatus, used in a mobile apparatus, wherein the mobile apparatus is configured to connect to a charging pile to form a charging system, the charging pile is configured to charge a cell of the mobile apparatus, and the charging control apparatus comprises a processor and a memory coupled to the processor; and
the memory stores program code, and the processor is configured to execute the program code in the memory, to perform the charging control method according to any one of claims 1 to 11.

13. A chip, comprising the charging control apparatus according to claim 12.

14. A mobile apparatus, comprising a cell and the charging control apparatus according to claim 12 connected to the cell.
